# EUROPEAN PATENT SPECIFICATION

(11) **EP 1 101 809 B1**
(45) Date of publication and mention of the grant of the patent: **04.07.2007**
(21) Application number: 00309983.5
(22) Date of filing: 09.11.2000
(51) Int. Cl.: C09J 103/00, C09J 103/02

(54) **Adhesive composition and application thereof in the preparation of paper and corrugated board**
Klebstoffzusammensetzung und Verwendung zur Herstellung von Papier und Wellpappe
Composition adhésive et utilisation de celle-ci dans la préparation de papier ou de carton ondulé

(30) Priority: 09.11.1999 GB 9926423
(43) Date of publication of application: 23.05.2001
(73) Proprietor: Cerestar Holding B.V., 4551 LA Sas Van Gent (NL)
(72) Inventor: Koebernick, Hubert, 47803 Krefeld (DE); Josten, Heinrich, 47533 Kleve (DE); Brokjans, Susanne, 47239 Duisburg (DE); Westphal, Rainer, 47533 Kleve (DE); Rebier, Jean-Michel, 62100 Calais (FR)
(74) Representative: Knowles, James Atherton

(56) References cited:
- PATENT ABSTRACTS OF JAPAN vol. 007, no. 091 (C-162), 15 April 1983 (1983-04-15) & JP 58 017183 A (HONSHIYUU SEISHI KK), 1 February 1983 (1983-02-01) & CHEMICAL ABSTRACTS, vol. 99, no. 10, 5 September 1983 (1983-09-05) Columbus, Ohio, US; abstract no. 72492, "Adhesives for cardboard manufacture" & JP 58 017183 A (HONSHU PAPER CO LTD.) 1 February 1983 (1983-02-01)
- PATENT ABSTRACTS OF JAPAN vol. 012, no. 159 (C-495), 14 May 1988 (1988-05-14) & JP 62 273275 A (TOPPAN PRINTING CO LTD;OTHERS: 01), 27 November 1987 (1987-11-27) & DATABASE WPI Week 198802 Derwent Publications Ltd., London, GB; AN 1988-010479 "Adhesive for mfg. waterproof corrugated cardboard - comprises rubber latex, starch and calcium carbonate dispersed in water." & JP 62 273275 A (DAINIPPON PRINTING CO LTD & NIPPON SHOKUHIN KAKO KK.), 27 November 1987 (1987-11-27)

## Description

### Technical field

The present invention discloses an adhesive composition comprising insoluble inorganic salts and minerals wherein the salt is calciumcarbonate. The invention further discloses the use of the adhesive composition in the preparation of paper and/or corrugated board.

### Background of the invention

Starch-based adhesives are widely used as paper and cardboard adhesives, particularly in the corrugating industry in which the corrugated board is manufactured in a continuous process. In such a process a sheet of paper is first corrugated on heated rolls and a sheet of liner paper is subsequently attached by applying a starch-based adhesive to the tips of the corrugations on one side. Corrugated board which is obtained according to this process is the so-called 'single-facer' corrugated board whereas a 'double-backer' board has liner papers attached to both sides of the corrugated board.
It is essential in the production of corrugated board that the starch adhesive should be able to rapidly form a bond between the paper surfaces under conditions in which relatively high (single-facer) and relatively low (double-backer) pressure may be applied and in which there is a good and extensive contact (single-facer) and possibly a restricted contact (double-backer) between the surfaces to be bonded. It is important therefore, that the viscosity of the starch adhesive should be such as to permit ease of application to a moving surface yet should be capable of a rapid increase caused by gelatinisation of the starch.
The rapid gelatinisation of the starch is promoted by the high application temperature and by including sodium hydroxide and a boron compound such as boric acid or borax in the adhesive composition. Since 1937 the so-called 'Stein-Hall' starch adhesives have been widely used. The adhesive composition in this application is characterised in that the starch is present in both gelatinised and ungelatinised form. The gelatinised starch acts as the 'carrier' and is an effective dispersing agent for the ungelatinised starch. The ungelatinised starch is caused to gelatinise on the paper surface resulting in the desired rapid increase in viscosity. Variants of this composition are the 'no-carrier' and Minocar starch adhesives in which all the starch is ungelatinised but is partially swollen; and adhesives in which a large part of the starch (40 to 60%) is partially swollen and the remainder is unswollen and ungelatinised. A typical Stein-Hall corrugating adhesive contains water (81.26%), ungelatmised starch (14.81%), gelatinised starch (2.96%), sodium hydroxide (0.56%) and borax decahydrate (0.41%).
A further application of these types of adhesives is in lamination, in this case the pasting of the adhesive is performed over the complete surface area.
Besides starch also dispersions of synthetic resins are commonly used.
JP 62-273275 relates to an adhesive composition for preparing waterproof corrugated board, consisting of a rubber latex composition that has an excellent water resistance and pasting suitability, that can be pasted at low temperatures, and that suppresses the generation of warps. As a filler calcium bicarbonate is used.
JP 58-17183 relates to an adhesive for the production of corrugated board. The adhesive is only for a Stein Hall process. The filler that is used has no special limitations except for the average diameter which is between 1 an 15 µm and provided that it is a filler that is used in general as a filler examples are calciumcarbonate, calciumbicarbonate and clay. The examples use calciumbicarbonate and the total dry solids content is maximally 37%.

The finished adhesive when added to the board generally contains a limited amount of dry solids, as can be seen from the adhesive composition specified above. Maximum values of up to about 30 to 37 % on a dry weight basis have been reported, whereas on the mean about 25% D.S. is used. When starch is used as binding agent there is a limit to the upper amount of starch, which can be included in the adhesive preparation. With higher amounts of starch the amount of water is not sufficient to guarantee the desired adhesion. In addition when more starch is added the viscosity becomes too high.
The considerable amount of water which is required when starch is used i.e. for 10g/m2 of dry adhesive at 35% dry solids 22,1 g/m2 of water is present, has some important drawbacks.

First of all the quality is lowered and second a large amount of energy is required to evaporate the water. Thus it would be desirable to utilise an adhesive having a much higher dry solids content. Such an adhesive forms the subject of the present invention.

### Summary of the invention

The present invention discloses a starch-based adhesive composition having dry solids content of at least 40 %, preferably at least 43 % and more preferably at least 46 %.
The increase of the dry solids content is achieved by the addition of inorganic salts.
Therefore the adhesives of the present invention which have a dry solids content of at least 40 % comprise in addition to the typical adhesive components such as soda, borax, sodium hydroxide, protein and no synthetic polymers the following ingredients;
a) a dispersion of starch,
b) a filler which is calciumcarbonate and wherein the ratio of starch to calciumcarbonate is at least 50% : 50%, preferably 60% : 40% and more preferably between 60% : 40% and 90% : 10%.
The calciumcarbonate is characterized in that it has a particle size diameter distribution wherein at least 40 % of the particles are smaller than 2 micrometer preferably at least 50 % are smaller than 2 micrometer and more preferably at least 60 % are smaller than 2 micrometer
The starch used in this application may be any type of starch and it may be in the form of native starch, chemically or enzymatically modified starch, physically modified starch and starch containing milling fractions (B-starch) or combinations thereof.
The starch-based adhesive of the above-mentioned composition was tested and found to be particularly useful in paper and corrugated board applications, in addition good results have been obtained in lamination.

### Detailed description of the invention

The present invention discloses a starch-based adhesive composition having dry solids content of at least 40 %, preferably at least 43 % and more preferably at least 46 %.
The increase of the dry solids content is achieved by the addition of inorganic salts. Typically the particle size of the inorganic salt is smaller than that of the starch. The adhesives of the present invention which have a dry solids content of at least 40 % comprise in addition to the typical adhesive components such as soda, borax, sodium hydroxide, protein, etc and no synthetic polymers, the following ingredients;
a) a dispersion of starch,
b) a filler which is calciumcarbonate and wherein the ratio of starch to calciumcarbonate is at least 50% : 50%, preferably 60% : 40% and more preferably between 60% : 40% and 90% : 10%.
The calciumcarbonate is characterized in that it has a particle size diameter distribution wherein at least 40 % the particles are smaller than 2 micrometer preferably at least 50 % are smaller than 2 micrometer and more preferably at least 60 % are smaller than 2 micrometer

When used in the preparation of paper or corrugated board no negative influences were observed with respect to viscosity, nor was there any negative effect with respect to the increase or decrease of the gelatinisation temperature. Calciumcarbonate is inert in the adhesive process and hence does not influence any chemical processes, which may take place. In addition the considerable amount of water which would have to be evaporated prior to the present invention is markedly reduced.

The starch used in this application is any type of starch, as far as the origin is concerned, and it is in the form of native starch, chemically or enzymatically modified starch, physically modified starch and starch containing milling fractions (B-starch) or combinations thereof. The physically modified starch is for example in the form of roll-dried starch or in the form of extruded starch.
The starch used in the present composition is selected from the normally available or employed starches. The starch may be from wheat, corn, potato, tapioca or peas. As for the pretreatment of the starch, the starch may be native or it may be chemically or enzymatically or physically modified. In addition, as in normal preparation of starch-based adhesives the starch may be (partly) pregelatinised or swollen as is the case in the normal Stein-Hall or no-carrier or Minocar processes. The adhesive composition of the present invention is suited for use all three mentioned processes.
Of particular interest are corn, wheat (also wheat B-starches) potato, tapioca, rice and pea starches.
A further characteristic of the compositions according to the present invention is that they do not contain latex, polyvinyl acetate or other polymers i.e. no synthetic polymers have been added. This results in much less environmental pollution. Moreover, when the paper or board is recycled, the subsequent gluing is not affected by the adhesive material, which is already present, so that no special precautions have to be taken.
As a further advantage of the adhesive product of the present invention an increase in the physical strength and other physical characteristics of the paper or corrugated board was observed.

In the first (comparative) Example under b) and c) it is demonstrated that preparation of an adhesive composition containing large amounts of CaCO3, wherein the particles have a diameter which is outside of the claimed range is not very practical. Addition of 40 % CaCO3 does not give a workable product. The time for obtaining the fully dissolved product is too long. If one would not wait for such a time the viscosity not being constant over time is difficult to regulate.
The second Example under b) and c) shows the good results when specified CaCO3 is used.
The lab tests of Example 3 demonstrate that the physical characteristics of the board prepared with CaCO3-containmg glue are better then when no CaCO3 is added.

### Example

### Example 1. Addition of CaCO3 to starch-based adhesives (comparative Example)

a) CaCO3 was added to a normal starch-based adhesive after the preparation and before the preparation of the glue. The effect on viscosity, sedimentation and adhesion was determined.
CaCO3 Etiqette Violette® was used. This product has the following characteristics

| | |
|---|---|
| pH value (10%) | 9.5 |
| moisture | 0.37 % |
| bulk density (loose) | 712 g/l |
| bulk density (compressed) | 908 g/l |
| sieve analysis | > 200 µm 43.6% |
| | > 100 µm 82.9% |

The product lumped during sieving the average particle size of the CaCO3 as provided on the data sheet of the product is 2.5µm. Note that this CaCO3 is not within the specification of the CaCO3 as claimed in the present invention.
b) glue prepared first, followed by addition of CaCO3. The product is based on C☆Gum^{™} 20412(Cerestar), which is a mixture of different native starches. The product contains 30% native starch, 2.5 % gelatinised starch, 0.47% caustic soda and 0.99% borax.
The following procedure was followed;

| | | |
|---|---|---|
| 300 parts | water | |
| 22 parts | C☆Gmu 20412 | |
| 4 parts | Caustic soda | stirring for 30 min., at 50°C, 1000rpm |
| 550 parts | water | |
| 342 parts | C☆Gum 20412 | |
| 3.6 parts | borax | stirring for 30 min., at 30°C, 1420rpm |

The final viscosity of this product was 42 s. SteinHall and the gel temperature 49.5°C.
To 900 parts of prepared glue was added 180 parts CaC03 the mixture was stirred for 5 min., at 30°C, 1420rpm. The viscosity of the mixture was 74 s. SteinHall measured in the fluid medium as not all CaCO3 had dispersed. The gel temperature was 47.5°C. After stirring for 3 h., at 35°C, 600rpm the CaCO3 was fully dissolved and the viscosity was 68 s. SteinHall. After standing at room temperature for 18 h. no precipitate was formed and the viscosity was 83 s. SteinHall after stirring for 5 min. at 1420 rpm. Adhesive properties when measured after 3 h (C-flute, 15s., 150 µm, 185°C) were comparable with example 2.
c) in a second test the CaCO3 was added to the starch prior to preparation of the adhesive i.e. 600 parts C☆Gum^{™} 20412 were mixed with 400 parts CaCO3. This mixture had a pH of 8.1, a dry solids content of 90.5 % The mixture contained 40.7% native starch, 4 % gelatinised starch, 0.6% caustic soda and 0.6 % Borax. The glue was prepared as follows,

| | | |
|---|---|---|
| 300 parts | water | |
| 35 parts | mixture | |
| 5 parts | caustic soda | stirring for 30 min., at 50°C, 1000rpm |
| 550 parts | water | |
| 548 parts | mixture | |
| 3.6 parts | borax | stirring for 30 min., at 30°C, 1420rpm |

The final viscosity of this product was 66 s. and the gel temperature 47°C, the product contained a large amount of undispersed CaCO3. After stirring for 3 h., at 35°C, 600rpm the CaCO3 was still not fully dispersed and
the viscosity was 97 s. SteinHall. After further stirring for 22 h. 600 rpm, 35°C the CaCO3 was fully dissolved and the viscosity was 119 s. SteinHall. Adhesive properties when measured after 3 h (C-flute, 15s., 150 µm, 185°C) were comparable with example 2.
It is concluded that the CaCO3 used in this example is not practically applicable. The time needed for obtaining the fully dissolved product is too long. If one would not wait for such a time the viscosity not being constant over time is difficult to regulate.

### Example 2. Addition of CaCO3 to starch-based adhesive

a) CaCO3 was added to a normal starch-based adhesive after the preparation and before the preparation of the glue. The effect on viscosity, sedimentation and adhesion was determined.
As CaCO3 Hydrocarb® OG was used. This product has the following characteristics

| | | |
|---|---|---|
| pH value (10%) | 9.0 | |
| moisture | < 0.3 % | |
| bulk density (loose) | 620 g/l | |
| bulk density (compressed) | 770 g/l | |
| sieve analysis | > 200 µm | 32.9 % |
| | > 100 µm | 83.8 % |

The product lumped during sieving the average particle size of the CaCO3 as provided on the data sheet of the product is 1.6 µm.
b) glue prepared first, followed by addition of CaCO3.
The product is based on C☆Gum 20412, which is mixture of different native starches. The product contains 30% native starch, 2.5 % gelatinised starch, 0.47% caustic soda and 0.99% borax.
The following procedure was followed;

| | | |
|---|---|---|
| 300 parts | water | |
| 22 parts | C☆Gum 20412 | |
| 4 parts | Caustic soda | stirring for 30 min., at 50°C, 1000rpm |
| 550 parts | water | |
| 342 parts | C☆Gum 20412 | |
| 3.6 parts | borax | stirring for 30 min., at 30°C, 1420rpm |

The final viscosity of this product was 35 s. SteinHall and the gel temperature 51,0°C.
To 900 parts of prepared glue was added 180 parts CaCO3 the mixture was stirred for 5 min., at 30°C, 1420rpm. The viscosity of the mixture was 46 s. SteinHall measured in the fluid medium as all CaCO3 had dispersed. The gel temperature was 52.0°C. After stirring for 3 h., at 35°C, 600rpm the viscosity was 47 s. SteinHall. After standing at room temperature for 18 h. no precipitate was formed and the viscosity was 56 sec SteinHall after stirring for 5 min. at 1420 rpm. Adhesive properties when measured after 3 h (C-flute, 15s., 150 µm, 185°C) were comparable with example 1.
c) in a second test the specified CaCO3 was added to the starch prior to preparation of the adhesive i.e. 600 parts C☆Gum 20412 were mixed with 400 parts CaCO3. This mixture had a pH of 8.8, a dry solids content of 89.3 % The mixture contained 40.7% native starch, 4 % gelatinised starch, 0.6% caustic soda and 0.6 % Borax. The glue was prepared as follows,

| | | |
|---|---|---|
| 300 parts | water | |
| 35 parts | mixture | |
| 5 parts | caustic soda | stirring for 30 min., at 50°C, 1000rpm |
| 550 parts | water | |
| 548 parts | mixture | |
| 3.6 parts | borax | stirring for 30 min., at 30°C, 1420rpm |

The final viscosity of this product was 43 s. SteinHall and the gel temperature 52°C, the product contained no undispersed CaCO3.
After stirring for 3 h., at 35°C, 600rpm the CaCO3 was fully dissolved and the viscosity was 44 s. SteinHall. After further stirring for 22 h. 600 rpm, 35° C the viscosity was 69 s. SteinHall. Adhesive properties when measured after 3 h (C-flute, 15s., 150 µm, 185°C) were comparable with example 1.
It is concluded that the specified CaCO3 used in this example is very practically applicable.
The final viscosity is developed much faster and is stable in comparison with the product obtained according to Example 1.

### Example 3. Lab tests

C-Flute(200 g kraftliner + 200 g kraftliner) was bonded with 125 g kL and a gluefilm of 0.11 mm with the following adhesives:
a) Starch adhesive without CaCO3 - Dry Substance 33% cb viscosity 51 s. SteinHall; Gel Point 50° C
b) Starch adhesive with specified CaCO3 (Hydrocarb OG) - Dry Substance 45% cb; viscosity 50 s. SteinHall; Gel Point 49,5° C

### Results:

| | Adhesive a) | Adhesive b) |
|---|---|---|
| Flat Crush Test(FCT) | 4.04 KN | 4.25 KN |
| Edgewise Crush Test(ECT) | 788N | 841 N |
| Burst Strength | 1145 KPa | 1219 KPa |

The Flat Crush resistance test was performed according to the standard FEFCO testing method no. 6 of July 1985.
The Edgewise Crush resistance test was performed according to the standard FEFCO testing method no. 8 of 1982 with latest amendment of March 1997.
The Burst Strength test was performed according to the standard FEFCO testing method no. 4 of November 1994 with latest amendment of March 1997.

The results show that the physical characteristics of the board prepared with CaCO3-containing glue are better then when no CaCO3 is added.

## Claims

1. Adhesive composition with a dry solids content of at least 40 % comprising, in addition to the typical adhesive components such as soda, borax, sodium hydroxide, protein and no synthetic polymers; the following ingredients:
a) a dispersion of starch; and
b) a filler,
**characterised in that** the filler is calcium carbonate having a particle size diameter distribution wherein at least 40 % of the particles are smaller than 2 micrometer and **in that** the ratio of starch to calcium carbonate is at least 50% : 50%.

2. An adhesive composition as claimed is claim 1, wherein the ratio of starch to calcium carbonate is at least 60%: 40%, preferably between 60%: 40% and 90%: 10%.

3. An adhesive composition according to claim 1 or claim 2 **characterized in that** the calciumcarbonate has a particle size diameter distribution wherein at least 50 % of the particles are smaller than 2 micrometer and preferably at least 60 % are smaller than 2 micrometer.

4. An adhesive composition according to any one of the preceding claims **characterized in that** the dry solids content is at least 43 % preferably at least 45 %.

5. An adhesive composition according to any one of the previous claims wherein the starch is selected from the group consisting of native starch, chemically or enzymatically modified starch, physically modified starch and starch containing milling fractions (B-starch) or combinations thereof.

6. A paper laminating or board corrugating process comprising the step of gluing the paper together or gluing the fluted board with an adhesive composition according to anyone of claims 1 to 5.

7. Paper or corrugated board prepared with the use of an adhesive composition according anyone of the claims 1 to 5.

## Patentansprüche

1. Klebstoffzusammensetzung mit einem Trockenfeststoffgehalt von mindestens 40 %, umfassend zusätzlich zu den typischen Klebstoffkomponenten wie Soda, Borax, Natriumhydroxid, Protein und nicht synthetischen Polymeren die folgenden Inhaltsstoffe;
a) eine Dispersion aus Stärke und
b) einen Füllstoff,
**dadurch gekennzeichnet, daß** der Füllstoff Calciumcarbonat mit einer Teilchengrößendurchmesserverteilung ist, bei der mindestens 40 % der Teilchen kleiner als 2 Mikrometer sind, und daß das Verhältnis von Stärke zu Calciumcarbonat mindestens 50 % : 50 % beträgt.

2. Klebstoffzusammensetzung nach Anspruch 1, worin das Verhältnis von Stärke zu Calciumcarbonat mindestens 60 % : 40 % beträgt, bevorzugt zwischen 60 % : 40 % und 90 % : 10 % liegt.

3. Klebstoffzusammensetzung nach Anspruch 1 oder Anspruch 2, **dadurch gekennzeichnet, daß** das Calciumcarbonat eine Teilchengrößendurchmesserverteilung aufweist, bei der mindestens 50 % der Teilchen kleiner als 2 Mikrometer und bevorzugt mindestens 60 % kleiner als 2 Mikrometer sind.

4. Klebstoffzusammensetzung nach einem der vorhergehenden Ansprüche, **dadurch gekennzeichnet, daß** der Trockenfeststoffgehalt mindestens 43 %, bevorzugt mindestens 45 % beträgt.

5. Klebstoffzusammensetzung nach einem der vorhergehenden Ansprüche, worin die Stärke aus der Gruppe ausgewählt ist, bestehend aus natürlicher Stärke, chemisch oder enzymatisch modifizierter Stärke, physikalisch modifizierter Stärke und Stärke, die Mahlfraktionen enthält (B-Stärke) oder Kombinationen davon.

6. Papierlaminier- oder Pappewellungsverfahren, umfassend den Schritt der Zusammenleimung des Papiers oder der Verleimung der gewellten Pappe mit einer Klebstoffzusammensetzung nach einem der Ansprüche 1 bis 5.

7. Papier oder Wellpappe, hergestellt unter Verwendung einer Klebstoffzusammensetzung nach einem der Ansprüche 1 bis 5.

## Revendications

1. Composition adhésive avec une teneur en matière solide totale d'au moins 40 % comprenant, en plus des composants adhésifs typiques tels que la soude, le borax, l'hydroxyde de sodium, des protéines et aucun polymère synthétique, les ingrédients suivants :
a) une dispersion d'amidon ; et
b) un agent de remplissage,
**caractérisée en ce que** l'agent dé remplissage est du carbonate de calcium ayant une répartition granulométrique dans laquelle au moins 40 % des particules sont inférieures à 2 micromètres et **en ce que** le rapport de l'amidon au carbonate de calcium est d'au moins 50 %:50 %.

2. Composition adhésive selon la revendication 1, dans laquelle le rapport de l'amidon au carbonate de calcium est d'au moins 60 %:40 %, de préférence entre 60 %:40 % et 90 %:10 %.

3. Composition adhésive selon la revendication 1 ou 2, **caractérisée en ce que** le carbonate de calcium a une répartition granulométrique dans laquelle au moins 50 % des particules sont inférieures à 2 micromètres et de préférence au moins 60 % sont inférieures à 2 micromètres.

4. Composition adhésive selon l'une quelconque des revendications précédentes, **caractérisée en ce que** la teneur en matière solide totale est d'au moins 43 %, de préférence d'au moins 45 %.

5. Composition adhésive selon l'une quelconque des revendications précédentes, dans laquelle l'amidon est sélectionné parmi le groupe constitué de l'amidon natif, l'amidon modifié chimiquement ou par enzymes, l'amidon modifié physiquement et l'amidon contenant des fractions de broyage (amidon B), ou des combinaisons de ceux-ci.

6. Processus de laminage de papier ou d'ondulation de carton comprenant l'étape consistant à coller le papier ou à coller le carton cannelé au moyen d'une composition adhésive selon l'une quelconque des revendications 1 à 5.

7. Papier ou carton ondulé préparé grâce à l'utilisation d'une composition adhésive selon l'une quelconque des revendications 1 à 5.
